# EUROPÄISCHE PATENTSCHRIFT

(11) **EP 3 491 705 B1**
(45) Veröffentlichungstag und Bekanntmachung des Hinweises auf die Patenterteilung: **02.09.2020**
(21) Anmeldenummer: 16748352.8
(22) Anmeldetag: 26.07.2016
(51) Int. Cl.: H02G 11/02, B65H 75/44

(54) **KABELROLLE**
CABLE DRUM
ROULEAU DE CÂBLE

(43) Veröffentlichungstag der Anmeldung: 05.06.2019
(73) Patentinhaber: A. Steffen AG, Elektrohandel, 8957 Spreitenbach (CH)
(72) Erfinder: HEULE, Egon, 5412 Gebenstorf (CH); HECKMAN, Frans, 8906 Bonstetten (CH); STEFFEN, Fredy, 5430 Wettingen (CH)
(74) Vertreter: Klein, Thomas
(86) Internationale Anmeldenummer: PCT/IB2016/054441
(87) Internationale Veröffentlichungsnummer: WO 2018/020295

(56) Entgegenhaltungen:
- DE-A1-102015 201 758
- DE-U- 1 901 728
- DE-U1-202009 017 044
- US-A- 3 983 977
- US-A- 4 106 719

## Beschreibung

Die vorliegende Erfindung bezieht sich auf eine Kabelrolle für ein Stromkabel, bestehend aus einer Wickelspule und einem Ständer mit einer Trag- und Haltevorrichtung und mit einer zentralen Achse zur Lagerung der drehbaren Wickelspule mit einer Friktionsbremse.

Derartige Kabelrollen sind allgemein bekannt und finden in Haushalt und Gewerbe, vornehmlich für den kurzzeitigen Einsatz von Elektrogeräten, Verwendung. Zur Verhinderung von Überlastströmen sind diese Kabelrollen mit einem elektromechanisch-/thermischen Schalter ausgerüstet, der mit vertieft eingelassenen Steckdosen, innerhalb der Wickelrolle, in einer Schaltverbindung steht. Zum sicheren Ab- und Auf-15 rollen der Kabel ist eine Bremse vorgesehen, welche die Reibung an der Wickelspule erhöht und damit den Wickelvorgang sichern soll.

Nachteilig bei derartigen, notorisch bekannten Kabelrollen ist die ungenügend einstellbare und meist nicht konstante 20 Reibung beim Ab- und Aufrollen des Kabels, was konstruktionsbedingt ist.

Aus der DE 10 2015 758 A1 ist eine Kabelrolle der eingangs genannten Art bekannt, bei der die Wickelspule auf der zylindrischen Mantelfläche eines hohlzylindrischen Endstück drehbar gelagert ist und in dem hohlzylindrischen Endstück der Trag- und/oder Haltevorrichtung ein Bremselement durch ein Bedienelement axial verschiebbar angeordnet ist. Das Bremselement weist ein erstes konisches Gleitlager auf, das mit seiner konischen Reibfläche an einer konischen Gegenreibfläche der Wickelspule in Anlage ist. Durch das Bedienelement ist das Spiel zwischen den beiden Reibflächen einstellbar.

Aus der US 4 106 719 A ist eine Rolle für ein Kabel eines Drachens bekannt, das eine Haltevorrichtung mit einer zentralen Achse zur Lagerung einer drehbaren Wickelspule mit einer sich außerhalb der Wickelspule befindenden Friktionsbremse aufweist. Dabei ist an der Wickelspule ein erstes kegelförmiges Gleitlager angeordnet. Ein zweites kegelförmiges Gleitlager ist an einem Stellknopf angeordnet, wobei die Gleitflächen der Gleitlager aneinander liegen. Über ein Gewinde ist der Stellknopf auf einen Gewindestutzen der Haltevorrichtung aufschraubbar und so das Spiel zwischen den beiden Gleitlagern einstellbar.

Aus der US 3 983 977 A ist eine Kabelrolle ohne Ständer mit Trag- und/oder Haltevorrichtung bekannt. Eine Wickelspule ist mit ihrem axialen rohrartigen Innenteil auf einer zentralen Achse drehbar gelagert und weist eine Friktionsbremse auf. Dabei ist die Wickelspule an ihren axialen Endbereichen des rohrartigen Innenteils konisch ausgebildet. Durch das rohrartige Innenteil erstreckt sich eine Stellstange, die an ihren einen Ende einen Konus aufweist, der an dem einen konischen Endbereich des Innenteils in Anlage ist. Auf der Stellstange ist ein zweiter Konus axial verschiebbar angeordnet, der von einem Griff axial beaufschlagbar ist, wobei der Griff auf einem Gewinde der Stange aufschraubbar ist.

Aus der DE 19 01 728 U ist eine Kleinkabeltrommel zur Befestigung in Putzdosen bekannt, die eine drehbare Wickelspule und eine nicht einstellbare Friktionsbremse aufweist , bei welcher eine Bremse durch einen in der Wickelspule liegenden kegelförmigen Körper gebildet wird, der durch eine Feder gegen eine kegelförmige Innenfläche der Wickelspule gepresst wird. Diese Bremse kann mittels eines Druckknopfs gelöst werden. Eine Grundplatte weist ein Klemmstück auf, das in eine Putzdose einsetzbar und fixierbar ist. Es ist daher die Aufgabe der Erfindung eine Kabelrolle der eingangs genannten Art zu schaffen, die ein geringes Gewicht und eine große Stabilität aufweist und deren Reibung bei Drehung der Wickelspule konstant bleibt, sich leicht einstellen läßt und ein unbeabsichtigtes Weiterdrehen der Wickelspule beim Abrollen verhindert. Ebenfalls soll der Vorgang des Aufwickelns ohne Klemmen der Wickelspule und/oder losen Wicklungslagen erfolgen. Außerdem soll der Abrollvorgang leicht blockierbar sein.

Diese Aufgabe wird durch eine Anordnung der Konstruktionsteile nach dem Patentanspruch 1 gelöst.

Dabei zeigt es sich, dass ein einmalig eingestelltes axiales Spiel zwischen den kegelförmigen Gleitlagern konstant bleibt und somit eine dauerhaft gleichbleibende Friktionswirkung erzeugt.

Vorteilhaft ist die Justierung des Lagerspiels zwischen den beiden Gleitlagern durch einen Gewindering.

Kinematisch günstig ist die Ausgestaltung des Gewinderings.

Nachfolgend sind in abhängigen Ansprüchen Weiterbildungen des Erfindungsgegenstands aufgezeigt.

Ein in der zentralen Achse der Haltevorrichtung radial dehnbar ausgestaltetes erstes Gleitlager, gemäss Anspruch 2 und 3, erlaubt dessen sehr einfache und dauerhafte Fixierung.

Zur Verringerung der Reibung zwischen den beiden Gleitlagern und zur Verhinderung des Klemmens nach einem längeren Betriebsunterbruch, empfiehlt es sich, Anspruch 4, in einer Gleitfläche Längsnuten vorzusehen.

Besonders vorteilhaft ist ein zentraler, ringförmiger Gewindeflansch zur Einstellung des Lagerspiels und damit der Reibungskräfte zwischen den beiden Gleitlagern, vgl. Ansprüche 5 und 6.

Das Einstellen des Gewindeflansches durch eine Drehbewegung ist durch eine Ausgestaltung nach den Ansprüchen 7 und 8 besonders leicht.

Wirtschaftlich ist der Einsatz von Thermoplasten nach Anspruch 9, dies verringert gegenüber metallischen Lagern auch das Gesamtgewicht der Kabelrolle.

Eine Kabelführung gemäss Anspruch 10 ist vorteilhaft, kann doch die Reibung des Stromkabels an dieser Führung durch die Justierung des Lagerspiels leicht kompensiert werden.

Nachfolgend werden an Hand von Zeichnungen Ausführungsbeispiele einer erfindungsgemässen Kabelrolle dargestellt.

Es zeigen:
- Fig. 1: eine perspektivische Draufsicht einer Kabelrolle mit frontseitigen Steckdosen und heckseitiger Vorrichtung zum Einstellen des Lagerspiels,
- Fig. 2: die Kabelrolle nach Fig. 1, in verkleinerter Darstellung, mit ihrem heckseitgen Gewindering zum Einstellen des Lagerspiels,
- Fig. 3: eine Schnittdarstellung, vertikal durch die zentrale Achse nach Fig. 1, zeigt Einzelheiten der Kabelrolle und
- Fig. 4: die Ausgestaltung des zentralen, ersten Lagers zu dessen einfacher Fixierung, in einer Teilschnittdarstellung.

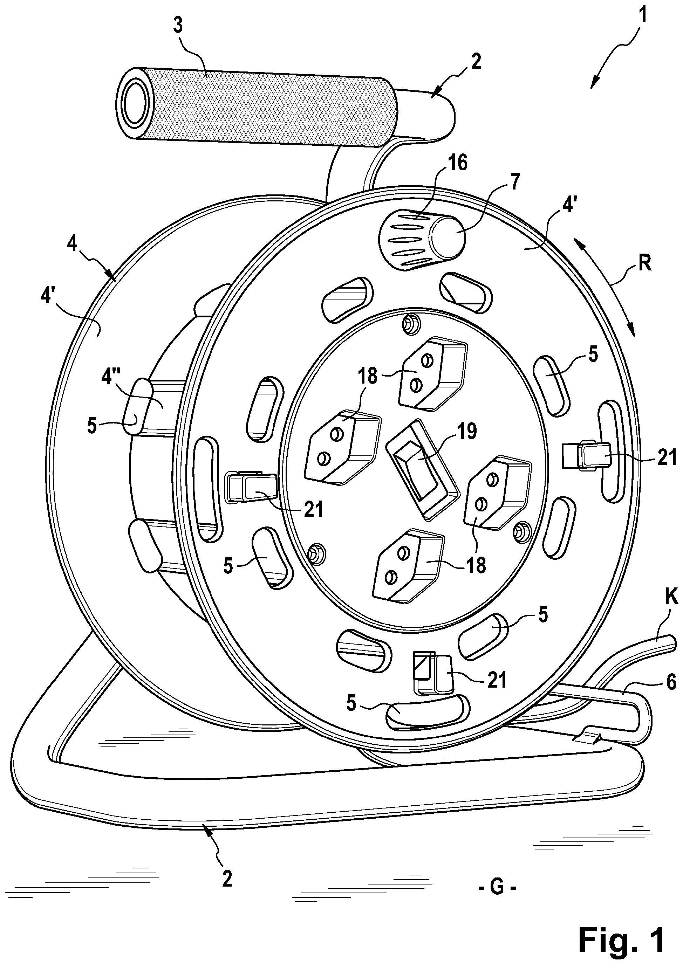

In Figur 1 ist eine Kabelrolle mit 1 bezeichnet, in der Art, wie sie in Haushalt und Gewerbe Verwendung findet.

Eine aus einzelnen Rohrsegmenten bestehende Trag- und Haltevorrichtung 2 ist zum Aufstellen auf eine ebene Fläche G vorgesehen. Oberseitig ist ein elastischer Traggriff 3 angeordnet, der bevorzugt auch beim Ab- und Aufwickeln eines Kabels K (vereinfacht dargestellt) mit einer Hand gehalten wird. Eine Wickelspule 4 mit Seitenwangen 4' weist Vertiefungen 4" in Form von Quernuten auf. Die Seitenwangen 4' besitzen Durchbrüche 5, die mit den Vertiefungen 4" korrespondieren, so dass der Wickelvorgang auch seitlich visuell kontrollierbar ist. Erleichtert werden die Wickelvorgänge durch eine Kabelführungsschiene 6, durch welche das Kabel K tangential zur Wickelspule 4 geführt ist. Auf deren Stirnseite ist peripher kurbelartig ein Drehgriff 7 angeordnet für eine Bewegung in beide Drehrichtungen R. Im Zentrum der Wickelspule 4 befinden sich, vertieft eingelassene Steckdosen 18 und ein Kippschalter 19 eines notorisch bekannten Überlastschutzes.

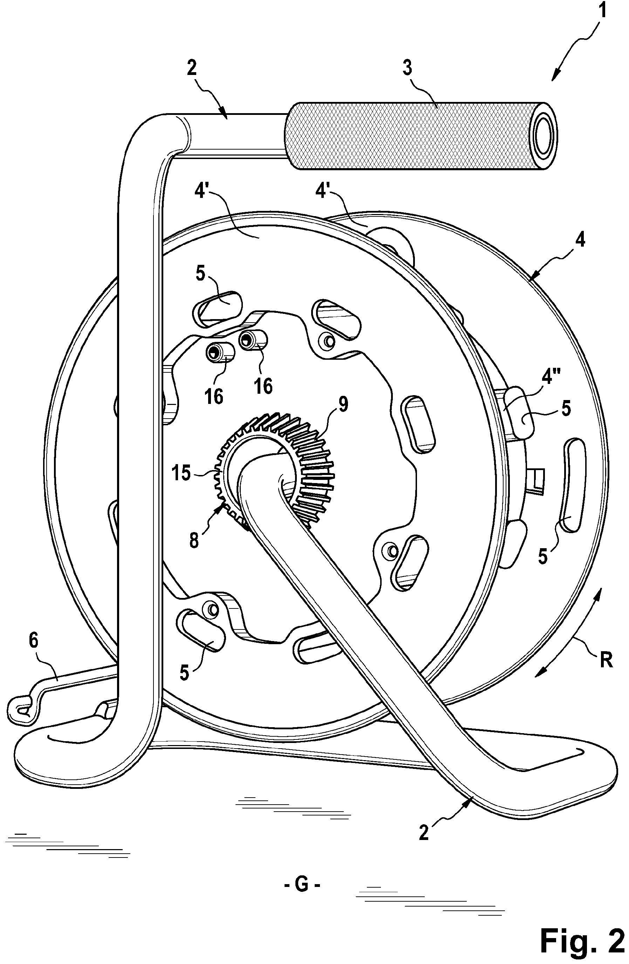

Nicht sichtbar ist die ebenfalls zentrale aber heckseitige Friktionsbremse, deren zur Einstellung dienende Gewindering 8 in Fig. 2 ersichtlich ist. In dieser Figur erkennt man, dass der Gewindering 8 eine starke Randrierung 9 aufweist und in diesem Bereich - zur erleichterten manuellen Betätigung - konisch ausgestaltet ist. Die Kabelführungsschiene 6 ist endseitig umgebogen um Verletzungen zu vermeiden. Ebenfalls erkennbar sind zwei aus der Wickelspule 4 herausragende Gewindebuchsen 16, die der sicheren Befestigung des zu den Steckdosen 18 führenden Teils des Stromkabels K dienen.

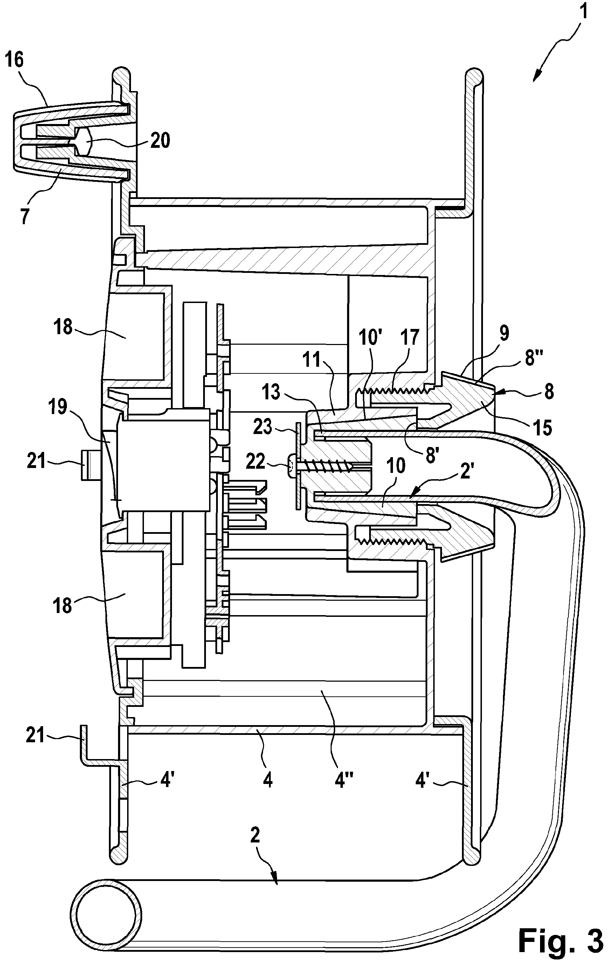

Die Schnittdarstellung Fig. 3 zeigt im Zentrum der Wickelspule 4 das zentrale Endstück 2' der Trag- und Haltevorrichtung 2, in das - vereinfacht dargestellt - das erste kegelförmige Gleitlager 10 festgeklemmt ist. Diese Fixierung erfolgt durch Einschrauben einer konischen Schraube 22 in die zentrale Bohrung des Lagers 10, wodurch dieses kraftschlüssig gespreizt ist.

Ein rotationsfähiges zweites Geleitlager 11 liegt partiell formschlüssig mit seiner Bohrung auf der kegelförmigen Gleitfläche 10' des Lagers 10, das einstückig ausgestaltet ist und in der äusseren Bohrung ein Gewinde 17 aufweist. In dieses Gewinde 17 ist der Gewindering 8 eingeschraubt, welcher sich mit seiner inneren Stirnfläche 8' auf der Stirnfläche des kegelförmigen Gleitlagers 10 abstützt. Durch Drehen an der Randrierung 9 kann das Lagerspiel zwischen den Gleitlagern 10 und 11 bequem engestellt werden. Zur erleichterten Betätigung des Gewinderings 8 befindet sich die Randrierung 9 auf einer Schrägfläche 8". - Empfehlenswert ist der Einbau eines - hier nicht gezeichneten - Gleitrings zwischen der inneren Stirnfläche 8' und der weiteren Stirnfläche des zweiten Gleitlagers 11, damit hier kein Verschleiss an den aus Polycarbonaten gefertigten Lagern 10 und 11 entsteht.

Ebenfalls ersichtlich ist hier der Aufbau des Drehgriffs 7 mit einer weiteren Randrierung 17, der mit seiner zentralen Achse mit einer Stopp-Mutter 20 in der frontseitigen Seitenwange 4' gehalten ist. Einander gegenüberliegende Kabelklammern 21 ragen aus dieser Seitenwange 4' heraus und dienen dem Festklemmen der Kabelenden.

Die Bezeichnung 18 bezieht sich auf angedeuteten Steckdosen, die ebenfalls frontseitig eingelassen sind. Der Wickelkörper selbst ist auf ein geringes Gewicht und eine grosse Stabilität ausgerichtet.

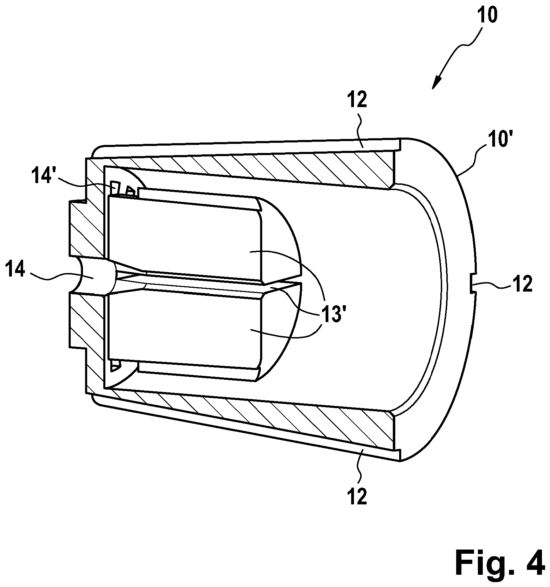

Fig. 4 zeigt die Ausgestaltung des ersten kegelförmigen Gleitlagers 10 mit seinen Befestigungsmöglichkeiten. Peripher befindet sich die Gleitfläche 10' in der vier Nuten 12 eingelassen sind, welche ein Festsitzen des zweiten Gleitlagers 11 (durch Kohäsionswirkungen) verhindern. Die zentrale Bohrung 14 nimmt die konische Befestigungsschraube 22 (Fig. 3) auf und spreizt über Schlitze und Dehnfugen 14' Klemm-Backen 13 des Gleitlagers 10. Im zentralen Endstück 2' der Trag- und Haltevorrichtung 2 entsteht so der erforderliche Kraftschluss zu dessen Fixierung.

Die Ausführungsbeipiele beziehen sich primär auf relativ kleine Kabelrollen für den Haushalt und das Gewerbe. Die erfindungsgemässe Lehre lässt sich aber auch auf grössere Kabelrollen, beispielsweise solche für 3-Phasen Kabel anwenden, wenn die Belastung der beladenen Wickelspule auf mehr als eine Lagerstelle verteilt wird. Ebenfalls kann die beschriebene Trag- und Haltevorrichtung durch äquivalente Mittel ersetzt werden, dies insbesondere für industrielle Einsätze der Kabelrolle. Eine der mechanischen Belastung angepasste Optimierung der verwendeten Materialien erlaubt den Bau von sehr kostengünstigen und betriebssicheren Kabelrollen, die keine Nachjustieren des Lagerspiels erfordern. Bei festinstallierten Kabelrollen - in Maschinen oder Gebäuden - ist die Möglichkeit einer vollständigen Blockierung des Abrollvorgangs vorteilhaft. Die in einander pressbaren kegelförmigen Gleitlager-Buchsen bewirken, durch den resultierenden Formschluss eine leicht wieder lösbare Fixierung der Kabelrolle. Adhäsionskräfte welche zwischen den Kegelflächen der Gleitlager entstehen verstärken die Haftwirkung beträchtlich.

### Bezeichnungsliste

- 1: Kabelrolle für Haushaltzwecke
- 2: Trag- und Haltevorrichtung (aus Rohrsegmenten)
- 2': zentrales Endstück von 2
- 3: Traggriff (elastisch)
- 4: Wickelspule für Kabel
- 4': Seitenwangen von 4
- 4": Vertiefungen (Quernuten) in 4
- 5: Durchbrüche
- 6: Kabelführungsschiene
- 7: Drehgriff (Kurbel)
- 8: Gewindering
- 8': Stirnfläche von 8 (Stützfläche)
- 8": Schrägfläche an 8
- 9: Randrierung
- 10: erstes kegelförmiges Gleitlager
- 10': Gleitfläche von 10
- 11: zweites kegelförmiges Gleitlager
- 12: Längsnuten in 10'
- 13: Klemm-Backen
- 14: Zentrale Bohrung in 10
- 14': Dehnfugen
- 15: Flansch
- 16: Gewindebuchsen (herausragend)
- 17: weitere Randrierung
- 18: Steckdosen (eingelassen)
- 19: Kippschalter/Überlastschutz
- 20: Stopp-Mutter
- 21: Kabelklammern
- 22: Befestigungsschraube (konisch)
- 23: Anschlagscheibe

- G: Standfläche (Ground)
- K: Stromkabel
- R: Drehrichtungen

## Patentansprüche

1. Kabelrolle für ein Stromkabel (K), bestehend aus einer Wickelspule (4) und einem Ständer mit einer Trag- und Haltevorrichtung (2) und mit einer zentralen Achse zur Lagerung der drehbaren Wickelspule (4) mit einer Friktionsbremse, wobei auf der zentralen Achse auf einem zentralen Endstück (2') der Trag- und Haltevorrichtung (2) ein erstes, kegelförmiges Gleitlager (10) kraftschlüssig aufgesetzt ist, das eine äußere kegelförmige Gleitfläche (10') aufweist, wobei im Innern der Wickelspule (4) ein mit der Wickelspule (4) verbundenes und eine Bohrung aufweisendes zweites kegelförmiges Gleitlager (11) rotationsfähig wenigstens partiell formschlüssig mit seiner Bohrung auf der Gleitfläche (10') liegend auf dem ersten kegelförmigen Gleitlager (10) gelagert ist, wobei sich die kleinsten Durchmesser beider Gleitlager (10,11) in das innere der Wickelspule (4) erstrecken, und wobei das Lagerspiel der beiden Gleitlager (10,11) zueinander einstellbar ist, so dass die gewünschte Bremswirkung an der Wickelspule (4) entsteht, wobei das Lagerspiel zwischen den beiden Gleitlagern (10,11) durch einen Gewindering (8) einstellbar ist, der in ein Gewinde (17) in einer äußeren Bohrung des zweiten Gleitlagers (11) eingeschraubt ist und mit seiner Stirnseite (8) auf die Stirnseite des ersten Gleitlagers (10) eine konzentrische Kraft ausübt.

2. Kabelrolle nach Anspruch 1, wobei das erste Gleitlager (10) in der zentralen Achse der Trag- und Haltevorrichtung (2), imm Endstück (2'), radial dehnbar ausgestaltet ist.

3. Kabelrolle nach Anspruch 2, wobei das erste Gleitlager (10) partiell hohl ist und stirnseitig, durch radiale Schlitze (14') elastisch ausgestaltet ist.

4. Kabelrolle nach Anspruch 1, wobei das erste Gleitlager (10) in seiner Gleitfläche (10') Nuten (12) aufweist, welche sich parallel, bei gleicher Tiefe in der Gleitfläche (10') , in Richtung des kleinsten Durchmessers des Gleitlagers (10) erstrecken.

5. Kabelrolle nach Anspruch 1, wobei der Gewindering (8), auf der den Gleitlagern (10) abgewandten Seite, einen ringförmigen Flansch (15) aufweist, der manuell drehbar ist und die beiden Gleitlager (10,11), in ihrer Längsachse verschieblich, fixiert.

6. Kabelrolle nach Anspruch 5, wobei der Gewindering(8) und der Flansch (15) einstückig ausgebildet sind.

7. Kabelrolle nach Anspruch 5, wobei der Flansch (15) eine Schrägfläche (8") aufweist,

8. Kabelrolle nach Anspruch 7, wobei der Flansch (15) auf seiner Schrägfläche (8") eine Randrierung (9) vorgesehen ist, welche einer manuellen Betätigung angepasst ist.

9. Kabelrolle nach Anspruch 1, wobei zumindest die beiden Gleitlager (10,11) aus einem Thermoplast, vorzugsweise aus einem Polycarbonat bestehen.

10. Kabelrolle nach Anspruch 1, wobei sich am Ständer (2), in Auf- und Abrollrichtung, über die Breite der Wickelspule (4), eine Kabelführung (6) erstreckt.

## Claims

1. Cable reel for a power cable (K), comprising a winding spool (4) and a stand having a carrying and retaining device (2) and having a central axis for the mounting of the rotatable winding spool (4) with a friction brake,
wherein a first conical sliding bearing (10), which has an outer conical sliding surface (10'), is positioned in a force-fitting manner along the central axis, on a central endpiece (2') of the carrying and retaining device (2),
wherein, in the interior of the winding spool (4), a second conical sliding bearing (11), which is connected to the winding spool (4) and has a bore, is mounted on the first conical sliding bearing (10) such that it can rotate and is located in an at least partially form-fitting manner, by way of its bore, on the sliding surface (10'), wherein the smallest diameters of the two sliding bearings (10, 11) extend into the interior of the winding spool (4), and
wherein it is possible to adjust the amount of bearing play of the two sliding bearings (10, 11) in relation to one another to achieve the desired braking action on the winding spool (4), wherein the amount of bearing play between the two sliding bearings (10, 11) can be adjusted by a threaded ring (8), which is screwed into a thread (17) in an outer bore of the second sliding bearing (11) and, by way of its end side (8), subjects the end side of the first sliding bearing (10) to a concentric force.

2. Cable reel according to Claim 1, wherein the first sliding bearing (10) is of radially expansible configuration along the central axis, or the endpiece (2'), of the carrying and retaining device (2).

3. Cable reel according to Claim 2, wherein the first sliding bearing (10) is partially hollow and, as a result of radial slits (14'), is of elastic configuration on the end side.

4. Cable reel according to Claim 1, wherein the first sliding bearing (10) has grooves (12) in its sliding surface (10'), and these grooves extend parallel, at the same depth in the sliding surface (10'), in the direction of the smallest diameter of the sliding bearing (10).

5. Cable reel according to Claim 1, wherein, on the side which is directed away from the sliding bearings (10), the threaded ring (8) has an annular flange (15), which is manually rotatable and fixes the two sliding bearings (10, 11) such that they can be displaced along their longitudinal axis.

6. Cable reel according to Claim 5, wherein the threaded ring (8) and the flange (15) are formed in one piece.

7. Cable reel according to Claim 5, wherein the flange (15) has a sloping surface (8").

8. Cable reel according to Claim 7, wherein, on its sloping surface (8"), the flange (15) is provided a knurling (9), which is suited for manual actuation.

9. Cable reel according to Claim 1, wherein at least the two sliding bearings (10, 11) consist of a thermoplastic material, preferably of a polycarbonate.

10. Cable reel according to Claim 1, wherein a cable guide (6) extends on the stand (2), in the rolling-up and unrolling directions, over the width of the winding spool (4).

## Revendications

1. Rouleau de câble pour un câble électrique (K), composé d'une bobine d'enroulement (4) et d'un socle pourvu d'un dispositif porteur et de maintien (2) et comprenant un axe central destiné à supporter la bobine d'enroulement (4) rotative avec un frein à frottement, un premier palier à glissement (10) conique étant monté par assemblage de force sur l'axe central sur une première pièce d'extrémité centrale (2') du dispositif porteur et de maintien (2), lequel possède une surface de glissement (10') conique extérieure,
un deuxième palier à glissement (11) conique relié à la bobine d'enroulement (4) et possédant un alésage étant monté à rotation sur le premier palier à glissement (10) conique à l'intérieur de la bobine d'enroulement (4) en reposant au moins partiellement par complémentarité de formes sur la surface de glissement (10') par son alésage, les diamètres les plus petits des deux paliers à glissement (10, 11) s'étendant à l'intérieur de la bobine d'enroulement (4) et
le jeu de palier des deux paliers à glissement (10, 11) étant réglable l'un par rapport à l'autre, de sorte que l'effet de freinage souhaité se produit au niveau de la bobine d'enroulement (4), le jeu de palier entre les deux paliers à glissement (10, 11) étant réglable par une bague filetée (8) qui est vissée dans un filet (17) dans un alésage extérieur du deuxième palier à glissement (11) et qui exerce avec son côté frontal (8) une force concentrique sur le côté frontal du premier palier à glissement (10).

2. Rouleau de câble selon la revendication 1, le premier palier à glissement (10) dans l'axe central du dispositif porteur et de maintien (2) étant configuré extensible dans le sens radial dans la pièce d'extrémité (2').

3. Rouleau de câble selon la revendication 2, le premier palier à glissement (10) étant partiellement creux et de configuration élastique côté frontal par des fentes radiales (14').

4. Rouleau de câble selon la revendication 1, le premier palier à glissement (10) possédant des rainures (12) dans sa surface de glissement (10'), lesquelles s'étendent en parallèle, à la même profondeur dans la surface de glissement (10'), en direction du plus petit diamètre du palier à glissement (10).

5. Rouleau de câble selon la revendication 1, la bague filetée (8) possédant une bride annulaire (15) sur le côté à l'opposé des paliers à glissement (10), laquelle peut être tournée manuellement et bloque les deux paliers à glissement (10, 11) coulissants dans leur axe longitudinal.

6. Rouleau de câble selon la revendication 5, la bague filetée (8) et la bride (15) étant réalisées d'un seul tenant.

7. Rouleau de câble selon la revendication 5, la bride (15) possédant une surface oblique (8").

8. Rouleau de câble selon la revendication 7, la bride (15) étant munie sur sa surface oblique (8") un moletage (9) qui est adapté à un actionnement manuel.

9. Rouleau de câble selon la revendication 1, au moins les deux paliers à glissement (10, 11) se composant d'un thermoplastique, de préférence d'un polycarbonate.

10. Rouleau de câble selon la revendication 1, un guide-câble (6) s'étendant au niveau du bâti (2), dans la direction du déroulement et de l'enroulement, sur la largeur de la bobine d'enroulement (4).
